# FASCICULE DE BREVET EUROPEEN

(11) **EP 2 616 235 B1**
(45) Date de publication et mention de la délivrance du brevet: **29.07.2015**
(21) Numéro de dépôt: 11764866.7
(22) Date de dépôt: 09.09.2011
(51) Int. Cl.: B29D 11/00, G02B 3/08

(54) **PROCÉDÉ DE FABRICATION D'UNE STRUCTURE OPTIQUE SEGMENTÉE**
VERFAHREN ZUR HERSTELLUNG EINER SEGMENTIERTEN OPTISCHEN STRUKTUR
PROCESS FOR MANUFACTURING A SEGMENTED OPTICAL STRUCTURE

(30) Priorité: 14.09.2010 FR 1057327
(43) Date de publication de la demande: 24.07.2013
(73) Titulaire: Commissariat à l'Énergie Atomique et aux Énergies Alternatives, 75015 Paris (FR)
(72) Inventeur: DELLEA, Olivier, F-42350 La Talaudière (FR); FUGIER, Pascal, F-38190 Bernin (FR)
(74) Mandataire: Nony
(86) Numéro de dépôt international: PCT/IB2011/053955
(87) Numéro de publication internationale: WO 2012/035477

(56) Documents cités:
- EP-A1- 1 714 708
- US-A- 4 609 259
- US-A- 6 097 458
- US-A1- 2002 094 495

## Description

La présente invention concerne des procédés de préparation de structures optiques segmentées et plus particulièrement de lentilles de Fresnel.

### Arrière-plan

Une lentille de Fresnel est constituée d'une partie centrale lenticulaire généralement entourée de structures formant des anneaux concentriques (lentille sphérique) ou de formes linéaires (lentille cylindrique).

La qualité optique d'une lentille de Fresnel dépend entre autre de la forme des zones de Fresnel, de l'état de surface, du matériau et des flancs verticaux séparant deux zones consécutives.

Une lentille de Fresnel peut présenter par rapport à une lentille convergente classique une épaisseur plus faible et donc avantageusement un coefficient optique de transmission supérieur à surface d'interception égale.

On connait divers procédés de fabrication de lentilles de Fresnel.

Il est, par exemple, connu de JP 06234156 de fabriquer des lentilles de Fresnel par impression à chaud où un outil est pressé à chaud avec un matériau thermo-formable de manière à former les zones de Fresnel de ladite lentille.

Des lentilles de Fresnel peuvent encore être fabriquées par moulage. Une méthode de fabrication d'un moule est décrite dans US 2006/0234607.

Les méthodes de fabrication par impression à chaud ou moulage peuvent avoir pour inconvénient de limiter le profil des lentilles de Fresnel ainsi obtenues à la forme du tampon d'impression ou du moule et de restreindre la nature des matériaux utilisables aux matériaux thermo-formables.

JP2009184066 décrit la fabrication de lentilles de Fresnel par micro-usinage où un outil de forme adaptée vient usiner d'une manière particulière un matériau pour le structurer. Une telle méthode peut être relativement coûteuse et n'est pas adapté à une production de masse.

On connaît, par ailleurs, d'autres procédés mettant en oeuvre des méthodes de photolithographie. Il est notamment connu de US 5,779,751 de réaliser, par photolithographie, un empilement ou une succession de plots de différentes hauteurs, la juxtaposition de ces plots formant au final les motifs de la lentille de Fresnel.

Toutefois, les méthodes mettant en oeuvre des procédés de photolithographie peuvent être relativement coûteuses et mettent en oeuvre un nombre important d'étapes technologiques.

D'autres méthodes, notamment de structuration directe dans une couche photosensible, sont connues, par exemple de US 4,609,259.

Il existe un besoin de disposer d'un procédé de mise en oeuvre relativement simple pour fabriquer des structures optiques segmentées.

Il existe, en outre, un besoin de disposer d'un procédé permettant l'obtention d'une large variété de profils de structures optiques segmentées.

La présente invention vise à répondre à tout ou partie des besoins précités.

### Résumé

Selon un premier de ses aspects, la présente invention concerne un procédé de fabrication d'une structure optique segmentée comportant au moins les étapes consistant à :
a) disposer d'un substrat muni sur une de ses faces de micro-parois formant, lorsque le substrat est observé selon un axe perpendiculaire à ladite face, une pluralité d'évidements concentriques,
b) déposer au moins un matériau dans au moins un évidement,
c) mettre en contact au moins une partie de la surface supérieure du dépôt de matériau réalisé lors de l'étape b) avec au moins un milieu liquide apte à solubiliser ledit matériau et sensiblement inerte vis-à-vis des micro-parois et du substrat,
d) imposer une force centrifuge au milieu liquide déposé en c) de manière à modifier sa répartition sur la surface supérieure du dépôt de matériau réalisé lors de l'étape b),
la quantité de milieu liquide utilisée lors de l'étape c) permettant une solubilisation partielle du dépôt réalisé lors de l'étape b).

Avantageusement, le milieu liquide considéré en étapes c) et d) est au moins en partie vaporisable dans les conditions opératoires de l'étape d).

Par « surface supérieure du dépôt », il faut comprendre la surface du dépôt, située du côté opposé au substrat, recouvrant au moins en partie ledit substrat.

Par « milieu liquide sensiblement inerte vis-à-vis des micro-parois et du substrat », il faut comprendre que le milieu liquide n'est pas en mesure d'affecter l'intégrité du substrat et des micro-parois ou encore, en d'autres termes, de sensiblement solubiliser lesdits substrat et micro-parois dans l'éventualité où le milieu liquide viendrait en contact avec ceux-ci.

Par « pluralité d'évidements concentriques », il faut comprendre au moins deux évidements, centrés sur un même axe, de contour circulaire ou polygonal. Hormis l'évidement central qui peut être en forme de disque, les autres évidements sont généralement de forme annulaire, de préférence ininterrompue autour de l'axe.

Le procédé décrit ci-dessus peut, de préférence, être un procédé de préparation d'une structure lenticulaire et de manière particulièrement préférée d'une lentille de Fresnel.

Le procédé selon l'invention a pour avantage de directement permettre l'obtention d'une structure optique organisée sous la forme d'une juxtaposition de différents segments optiques, lesdits segments optiques étant générés en une unique étape.

Le procédé permet avantageusement d'accéder à des structures optiques formées d'au moins deux types, voire plus, de segments en une unique étape par opposition aux procédés conventionnels qui pour accéder à ce type d'architecture requièrent généralement, consécutivement à la formation de chaque type de segment, un assemblage « mécanique » pour former la structure attendue.

Le procédé selon l'invention peut avantageusement présenter un nombre d'étapes technologiques relativement réduit ainsi qu'une simplicité de mise en oeuvre.

Le procédé présente aussi l'avantage de pouvoir allier plusieurs types de matériaux et de traiter des substrats de grande dimension, par exemple de taille supérieure à 10 cm.

Les évidements concentriques formés par les micro-parois peuvent, par exemple, être de forme circulaire ou en forme de polygone admettant un centre, lorsque le substrat est observé selon un axe perpendiculaire à la face portant lesdites micro-parois.

Le matériau peut, lors de l'étape b), être déposé dans au moins 25 %, de préférence 50 %, de préférence 75 %, de préférence sensiblement la totalité des évidements.

La solubilisation du matériau déposé lors de l'étape b) peut notamment dépendre de la nature et de la quantité de milieu liquide mis en oeuvre lors de l'étape c), de la vitesse moyenne de rotation ainsi que de la durée durant laquelle celle-ci est appliquée lors de l'étape d).

L'étape d) peut être initiée pendant ou consécutivement à l'étape c).

Selon un autre de ses aspects, la présente invention concerne une structure optique segmentée fabriquée selon le procédé décrit ci-dessus.

La suite de la description s'attache à décrire plus en détail les différentes étapes du procédé selon l'invention.

Sauf mention contraire, les grandeurs moyennes décrites dans la suite correspondent à des moyennes arithmétiques.

### Etape a)

### Substrat

La nature du substrat utilisé dépend de la structure optique segmentée à réaliser, laquelle peut être destinée à être utilisée en transmission ou en réflexion.

Lorsque la structure optique segmentée est destinée à être utilisée en transmission, le substrat peut, par exemple, comporter, notamment consister en, un matériau :
- polymère, par exemple choisi parmi le polyméthacrylate de méthyle (PMMA), les silicones ou le polycarbonate (PC),
- inorganique, par exemple choisi parmi le verre ou le saphir,
- hybride, par exemple un matériau hybride sol/gel,

Lorsque la structure optique segmentée est destinée à être utilisée en réflexion, le substrat peut, par exemple, comporter, notamment consister en, un composé métallique, par exemple choisi parmi l'acier, l'aluminium, l'or, le molybdène, l'argent ou un des alliages des métaux précités.

Lorsque la structure optique segmentée est destinée à être utilisée en réflexion, le substrat peut, par exemple, comporter, notamment consister en, une couche d'un matériau recouverte d'un revêtement réfléchissant.

Le substrat peut, selon un exemple de réalisation, être du verre notamment du verre sodocalcique ou borosilicate.

Le substrat peut être de toute forme, notamment circulaire ou polygonale par exemple carrée.

La taille du substrat, notamment son diamètre, peut être comprise entre quelques mm et plusieurs dizaines de cm.

Par « taille du substrat », il faut comprendre la plus grande dimension du substrat.

La taille du substrat dépend généralement de l'application à laquelle est destinée la structure optique segmentée selon l'invention.

L'épaisseur du substrat peut, par exemple, être comprise entre quelques dizaines de microns et plusieurs dizaines de mm.

La face du substrat portant les micro-parois peut être plane.

### Micro-parois

Les micro-parois ont notamment pour fonction de permettre la formation du profil de la structure optique segmentée selon l'invention sous l'effet de la force centrifuge appliquée lors de l'étape d). A l'issue du procédé selon l'invention, les micro-parois sont à la base d'une discontinuité au niveau du profil de la structure optique segmentée selon l'invention.

Les micro-parois présentes sur le substrat peuvent toutes être constituées du même matériau.

En variante, des micro-parois peuvent être constituées de matériaux différents.

A titre illustratif et non limitatif, les micro-parois peuvent comporter, notamment consister en, un :
- matériau polymère organique, de préférence choisi parmi les résines photosensibles se présentant sous forme liquide ou sous forme de film sec, notamment apte à permettre l'obtention de micro-parois de hauteur moyenne comprise entre quelques microns et plusieurs dizaines de microns voire centaines de microns,
- matériau hybride sol/gel, notamment commercialisé sous la dénomination ORMOCER^{®} ou K-CL de la société KLOE, ou
- leurs mélanges.

Une première micro-paroi peut, par exemple, consister en un nitrure et une seconde micro-paroi peut, par exemple, consister en un verre.

La structure optique segmentée selon l'invention peut, par exemple, avoir des micro-parois de hauteur sensiblement constante.

En variante, les micro-parois sont de hauteur variable.

La structure optique segmentée selon l'invention peut, par exemple, avoir des micro-parois de largeur sensiblement constante.

En variante, les micro-parois peuvent être de largeur variable.

La structure optique segmentée, obtenue à l'issue du procédé selon l'invention, peut avoir des micro-parois vérifiant l'une au moins, de préférence la totalité, des caractéristiques suivantes :
- la hauteur moyenne des micro-parois est comprise entre quelques centaines de nm et plusieurs centaines de µm, par exemple entre 200 nm et 500 µm,
- la largeur moyenne des micro-parois est comprise entre quelques dizaines de nm et plusieurs dizaines de µm, par exemple entre 20 nm et 50 µm,
- l'espacement moyen entre deux micro-parois consécutives est compris entre quelques dizaines de microns et plusieurs mm, et
- le nombre de micro-parois est compris entre quelques unités et plusieurs milliers, par exemple entre 20 et 5000.

Les micro-parois peuvent être conservées une fois le procédé selon l'invention achevé.

En variante, au moins une partie, par exemple sensiblement la totalité, des micro-parois peut être supprimée une fois le procédé selon l'invention achevé. Une étape d'attaque chimique peut, par exemple, être réalisée afin de supprimer au moins une partie des micro-parois.

Le nettoyage mené pour l'élimination des micro-parois dépend de leur nature et peut être un nettoyage chimique en bain ou un nettoyage par voie plasma (voie sèche).

Parmi les résines photosensibles liquides produisant des micro-parois pouvant être supprimées une fois le procédé selon l'invention achevé, on peut, par exemple, citer les composés commercialisés sous les dénominations commerciales THB151N de JSR micro, NR21 de Futurrex ou NFR15.

Parmi les résines photosensibles liquides produisant des micro-parois n'étant pas destinées à être supprimées une fois le procédé selon l'invention achevé, on peut, par exemple, citer le composé commercialisé sous la dénomination commerciale SU8 50 de Microchem.

Parmi les résines photosensibles sous la forme de film sec produisant des micro-parois pouvant être supprimées une fois le procédé selon l'invention achevé, on peut, par exemple, citer les composés commerciaux appartenant à la série MX de Dupont.

Parmi les résines photosensibles sous la forme de film sec produisant des micro-parois n'étant pas destinées à être supprimées une fois le procédé selon l'invention achevé, on peut, par exemple, citer la TMMF S2000 de TOK.

L'utilisation d'une résine photosensible sous forme de film sec peut avantageusement permettre d'obtenir un procédé de mise en oeuvre relativement simple présentant notamment un nombre d'étapes réduit.

Dans un exemple de réalisation, les matières premières, précurseurs du matériau formant les micro-parois, peuvent être identiques au matériau qui sera déposé lors de l'étape b). Toutefois, dans ce cas, la transformation desdites matières premières en matériau constituant les micro-parois conférera à ces dernières une inertie vis-à-vis du milieu liquide appliqué lors de l'étape c).

Des micro-parois de hauteur sensiblement constante peuvent, par exemple, être réalisées par photolithographie avec des résines positives ou négatives mettant en oeuvre une étape de masquage ou étant effectuée par écriture laser directe, par lithographie par faisceau d'électrons ou d'ions, par lithographie nano-impression, par moulage, par injection ou par micro-usinage notamment par ablation laser.

Des micro-parois de hauteur variable peuvent, par exemple, être réalisées par photolithographie avec une résine positive mettant en oeuvre une étape de masquage à niveaux de gris ou étant effectuée par écriture laser directe, par lithographie par faisceau d'électrons ou d'ions, par micro-usinage notamment par ablation laser ou par polissage mécanochimique (« Chemical Mechanical Polishing » (CMP)) de la résine positive ou négative déposée pleine plaque.

A titre indicatif :
- les résines hybrides sol/gel commercialisées sous la dénomination commerciale K-CL par la société KLOE, et
- les résines organiques commercialisées sous les références SU8 et NFR15, peuvent, par exemple, être compatibles avec les procédés de lithographie.

### Etape b)

### Nature du matériau déposé lors de l'étape b)

Le choix du matériau déposé lors de l'étape b) relève des compétences de l'homme du métier et dépend des caractéristiques de la structure optique à réaliser.

Le matériau déposé lors de l'étape b) peut comporter, notamment consister en un :
- matériau polymère organique, notamment tel que décrit précédemment pour les micro-parois,
- matériau inorganique, notamment choisi parmi la silice dopée ou non dopée élaborée par voie sol/gel,
- matériau hybride sol/gel,
- leurs mélanges.

Le choix du matériau déposé lors de l'étape b) est aussi conditionné de manière à ce que lui seul soit affecté par le pouvoir solubilisant du milieu liquide dispensé lors de l'étape c).

Le matériau déposé lors de l'étape b) peut, plus particulièrement, être un matériau hybride sol/gel.

Un procédé de synthèse d'un exemple de matériau hybride sol/gel utilisable dans le cadre de la présente invention est décrit dans WO 2009/136093A1 ainsi que dans la publication : « S. Briche, D. Riassetto, C. Gastaldin, C. Lamarle, O. Dellea, D. Jamon, E. Pernot, M. Labeau, G. Ravel, M. Langlet, Sol-gel processing and uva patterning of epoxy-based hybride organic-inorganic thin films, J. Mater. Sci., vol. 43, N° 17, pp. 5809, 2008 ».

La hauteur du dépôt réalisé lors de l'étape b) peut être sensiblement constante.

En variante, la hauteur du dépôt réalisé lors de l'étape b) est variable.

La hauteur moyenne du dépôt réalisé lors de l'étape b) peut être comprise entre quelques nm et plusieurs centaines de µm.

La hauteur moyenne du dépôt réalisé lors de l'étape b) peut être comprise entre un centième de la hauteur moyenne des micro-parois et plusieurs fois la hauteur moyenne des micro-parois.

Le nivellement de la surface supérieure du dépôt peut être réalisé de manière à recouvrir ou non l'intégralité de la hauteur des micro-parois par le dépôt de matériau.

Ainsi, dans un exemple de réalisation, l'intégralité des micro-parois peut être noyée au sein du dépôt réalisé lors de l'étape b).

En variante, les micro-parois peuvent chacune présenter une hauteur supérieure à la hauteur du dépôt réalisé lors de l'étape b).

La hauteur moyenne du dépôt réalisé lors de l'étape b) est un paramètre ajustable qui peut dépendre des caractéristiques de l'étape c) ainsi que des propriétés de la structure optique à réaliser.

Le matériau peut, lors de l'étape b), être déposé dans au moins 25 %, de préférence 50 %, de préférence 75 % des évidements.

De manière particulièrement préférée, le matériau est, lors de l'étape b), déposé dans sensiblement la totalité des évidements.

### Dépôts multi-matériaux

Dans un exemple de réalisation, une pluralité de matériaux différents peuvent être déposés lors de l'étape b).

Ainsi, à l'issue de l'étape b), au moins un évidement peut comporter un dépôt multicouche comportant un empilement d'au moins deux couches consistant chacune en un matériau distinct.

En particulier, le centre du substrat peut, à l'issue de l'étape b), être recouvert par un dépôt multicouche de matériaux distincts.

Avantageusement, un évidement comportant une telle structure multicouche peut, par exemple, permettre de conférer à la structure optique segmentée selon l'invention des propriétés optiques particulières notamment un gradient d'indice ou une couche antireflet ou opto-électronique (capteur).

Eventuellement en combinaison avec l'exemple de réalisation relatif au dépôt multicouche au sein d'un même évidement décrit ci-dessus, il est possible, à l'issue de l'étape b), qu'un premier évidement comporte un dépôt d'un premier matériau et qu'un second évidement comporte un dépôt d'un second matériau différent du premier.

Le matériau peut être déposé par voie liquide ou voie sèche.

La méthode retenue pour le dépôt du matériau peut dépendre de la volonté d'obtention, à l'issue de l'étape b), d'une hauteur de dépôt sensiblement constante ou variable.

Lorsque l'on cherche à obtenir, à l'issue de l'étape b), un dépôt de hauteur sensiblement constante, le matériau peut, par exemple, être déposé *via* un procédé d'enduction centrifuge (« spin-coating »), d'immersion/tirage, de pulvérisation ou de dépôt chimique en phase vapeur, notamment de dépôt chimique en phase vapeur à pression sous-atmosphérique (respectivement procédés « CVD » et « SACVD »).

Lorsque l'on cherche à obtenir, à l'issue de l'étape b), un dépôt de hauteur variable, le matériau peut, par exemple, être déposé par jet d'encre ou microdispense.

L'étape b) peut, en outre, comporter une étape de stabilisation du dépôt obtenu, notamment au moyen d'un recuit thermique.

Les caractéristiques de l'étape b) peuvent être ajustées pour conférer ou non une surface supérieure du dépôt de forme plane.

L'étape b) peut, en outre, comporter une étape de façonnage de la structure supérieure du dépôt réalisé permettant notamment de modifier sa courbure.

Cette étape de façonnage peut, en outre, permettre de modifier la hauteur d'au moins une micro-paroi. Il est ainsi possible de passer d'une structure où les micro-parois sont de hauteur sensiblement constante à une structure où les micro-parois ont une hauteur variable.

L'étape de façonnage peut, par exemple, être réalisée mécaniquement et notamment par polissage mécanochimique.

### Etape c)

### Nature du milieu liquide

Comme mentionné plus haut, le milieu liquide doit permettre la dissolution d'une partie du dépôt réalisé lors de l'étape b) tout en restant inerte vis-à-vis des micro-parois dont la fonction est de bloquer l'écoulement dudit milieu liquide lors de l'étape d).

Le milieu liquide peut comprendre, notamment consister en :
- un acide, de préférence choisi parmi l'acide fluorhydrique,
- un alcool, de préférence choisi parmi l'alcool isopropylique, l'éthanol ou leurs mélanges,
- un développeur de résine photosensible, par exemple choisi parmi le MF319 commercialisé par la société Rohm and Haas, le TMAH (Hydroxyde d'ammonium tétraméthylique) ou le RD6 (nom commercial du développeur de la résine (NR2-2000p) fournie par Futurrex).

Le milieu liquide peut, par exemple, consister en une solution d'un ou plusieurs composé(s) choisi(s) dans la liste ci-dessus et présent(s) en une concentration supérieure ou égale à 1 % en volume par rapport au volume total de ladite solution.

Le MF319 commercialisé par la société Rohm and Haas peut, par exemple, être utilisé lorsque le matériau constituant les micro-parois est le NFR 15.

Le TMAH peut, par exemple, être utilisé lorsque le matériau constituant les micro-parois est le THB151N commercialisé par la société JSR micro.

Le RD6 peut, par exemple, être utilisé lorsque le matériau constituant les micro-parois est le NR21 commercialisé par la société Futurrex.

Lorsque le matériau déposé lors de l'étape b) est un matériau hybride sol/gel, le milieu liquide peut, en particulier, être un alcool comme par exemple l'alcool isopropylique.

### Dispense du milieu liquide

Le volume de milieu liquide dispensé lors de l'étape c) peut être compris entre quelques mL et plusieurs L, par exemple entre 3 mL et 5 L.

Le débit moyen du milieu liquide dispensé lors de l'étape c) peut être compris entre quelques mL/s et plusieurs L/s.

La pression du milieu liquide dispensé lors de l'étape c) peut être inférieure à 1 bar.

Le milieu liquide peut être dispensé par un système de dispense du milieu liquide, lequel peut être mobile durant tout ou partie de l'étape c).

En variante, le système de dispense du milieu liquide est immobile durant l'étape c).

Lorsque le système de dispense du milieu liquide est mobile durant tout ou partie de l'étape c), ce dernier peut être animé d'un mouvement continu ou discontinu.

Le système de dispense du milieu liquide peut encore être immobile durant l'étape c) et le mouvement du substrat comporter une composante de translation.

Le milieu liquide peut être dispensé de manière discontinue et contrôlée sur au moins une partie de la surface supérieure du dépôt réalisé en étape b).

Le milieu liquide peut être appliqué sur au moins 25 %, de préférence au moins 50 %, de préférence au moins 75 %, de préférence sensiblement la totalité de la surface supérieure du dépôt réalisé lors de l'étape b).

La quantité de milieu liquide introduite dans au moins un évidement étant ajustable et telle que le milieu liquide recouvre la totalité de la surface supérieure du dépôt réalisé dans ledit évidement.

La dispense du milieu liquide peut, par exemple, être effectuée par l'intermédiaire d'une buse d'injection, par jet d'encre ou pulvérisation.

### Etape d)

La vitesse de rotation du substrat détermine la rapidité à laquelle le milieu liquide s'écoule sur le dépôt réalisé lors de l'étape b) et donc le temps d'interaction entre lesdits milieux liquides et dépôt.

En outre, les caractéristiques de l'étape d) (vitesse et durée de rotation notamment) peuvent être ajustées de manière à favoriser la vaporisation du milieu liquide.

La durée de l'étape d) peut être comprise entre quelques secondes et plusieurs dizaines de minutes, par exemple entre 5 secondes et 100 minutes.

Le procédé décrit ci-dessus peut, par exemple, être tel que :
- la force centrifuge est imposée, durant l'étape d), à l'ensemble constitué par le substrat, les micro-parois, le matériau et le milieu liquide déposés, et
- la vitesse moyenne de rotation, durant l'étape d), du substrat autour de l'axe perpendiculaire à la face portant les micro-parois, matériau et milieu liquide est comprise entre quelques tours/minute et plusieurs milliers de tours/minute, notamment entre 5 tours/minute et 5000 tours/minute.

Lors de la mise en rotation du substrat, l'accélération peut être comprise entre quelques tours/minute/s et plusieurs milliers de tours/minute/s.

La force centrifuge imposée lors de l'étape d) peut, dans un exemple de réalisation, être maintenue au moins jusqu'à évaporation totale du milieu liquide.

En variante, l'évaporation du milieu liquide peut être achevée après arrêt de l'application de ladite force centrifuge.

Bien entendu, les caractéristiques de l'étape d) sont fonctions du matériau déposé à l'étape b), de la nature et de la quantité de milieu liquide mis en oeuvre ainsi que de la nature (dimension, complexité ...) de la structure optique segmentée à réaliser.

### Conditions opératoires

Les étapes c) et/ou d) peuvent avoir lieu dans une enceinte dans laquelle règne une température comprise entre 3 °C et 50 °C.

Les étapes c) et/ou d) peuvent, par exemple, avoir lieu dans une enceinte dans laquelle règne une pression comprise entre la pression atmosphérique et plusieurs dizaines de bars.

Les étapes c) et/ou d) peuvent avoir lieu dans une enceinte dans laquelle règne une hygrométrie relative comprise entre 10 % et 70 %, de préférence entre 20 et 55 %.

Par « hygrométrie relative », il faut comprendre le rapport de la pression partielle de vapeur d'eau présente dans l'enceinte, ladite enceinte ayant une température et une pression donnée, sur la pression de vapeur saturante de l'eau auxdites température et pression de l'enceinte.

### Description des figures

L'invention pourra être mieux comprise à la lecture de la description détaillée qui va suivre, d'exemples de mise en oeuvre non limitatifs de celle-ci, et à l'examen du dessin annexé, sur lequel :
- les figures 1 à 4 représentent schématiquement différentes étapes du procédé selon l'invention,
- la figure 1A représente schématiquement une variante des micro-parois représentées aux figures 1 à 4,
- les figures 2A à 2F représentent schématiquement des variantes du dépôt représenté à la figure 2,
- la figure 5 représente schématiquement une vue en perspective d'un substrat muni de micro-parois,
- la figure 6 représente une photographie en vue de dessus d'un substrat comportant des micro-parois utilisable dans le cadre du procédé selon l'invention, et
- les figures 7 et 8 représentent des photographies d'une structure optique segmentée obtenue grâce au procédé selon l'invention.

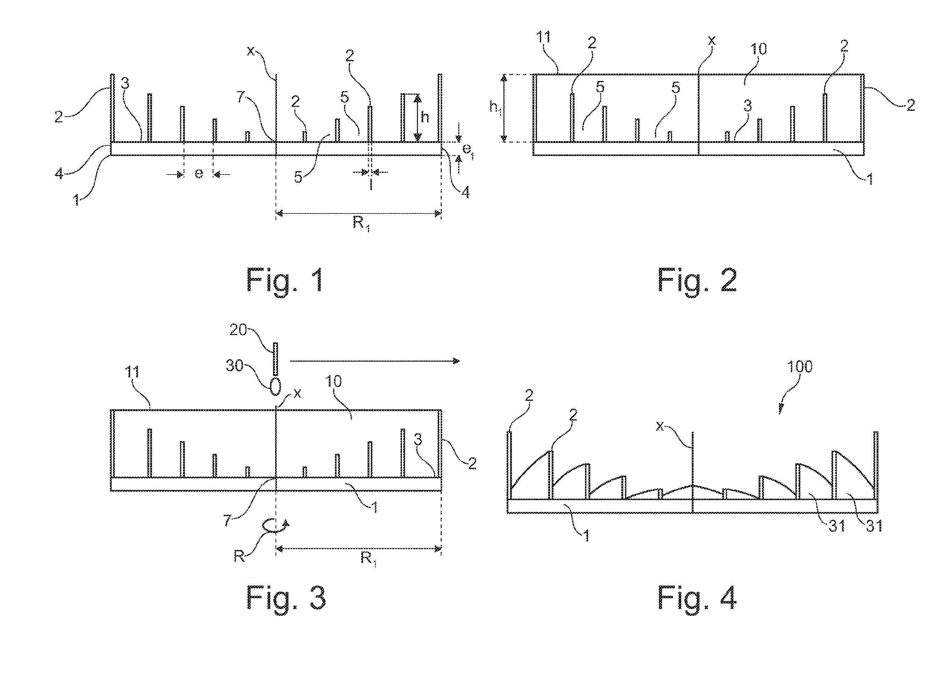

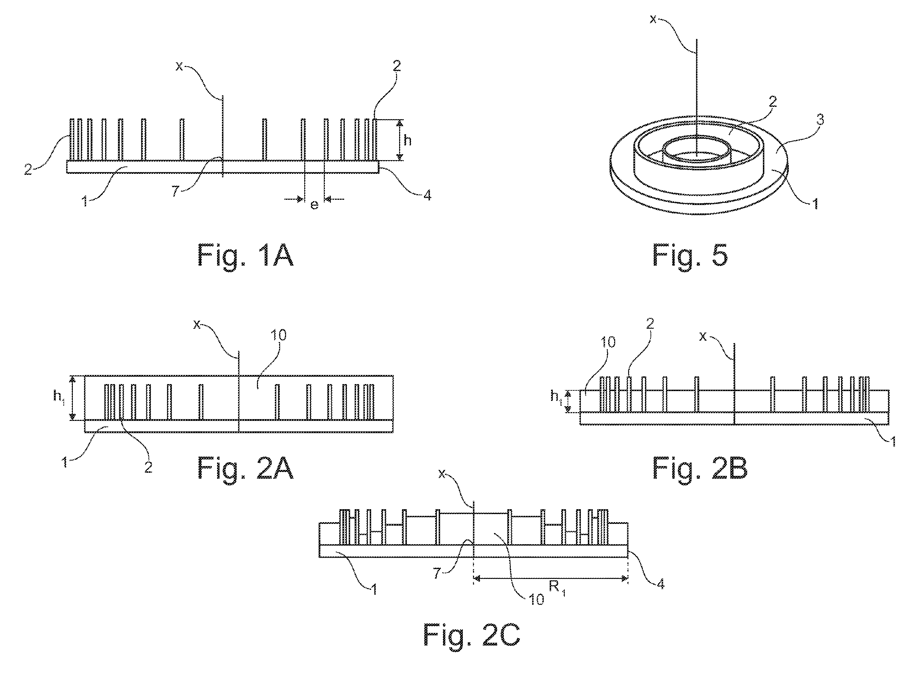

Pour des raisons de concision, les étapes du procédé selon l'invention ont été décrites aux figures 1 à 4 dans le cadre d'un seul exemple de réalisation du substrat, des micro-parois et du dépôt de matériau. Toutefois, le procédé selon l'invention peut, comme précisé plus loin, s'appliquer à diverses variantes de substrat, micro-parois et dépôt de matériau.

On a représenté à la figure 1 une vue en coupe d'un substrat 1 comportant sur une de ses faces 3 des micro-parois 2.

Le substrat 1 peut, lorsqu'observé selon un axe X perpendiculaire à la face 3 et coupant le substrat au niveau de son centre 7, être de toute forme, notamment circulaire ou polygonale admettant un centre, notamment carrée.

L'épaisseur *e*₁ du substrat 1 peut être sensiblement constante comme illustré à la figure 1.

Les micro-parois 2 peuvent être réalisées dans un matériau différent de celui constituant le substrat 1. En variante, les micro-parois 2 et le substrat 1 sont réalisés dans le même matériau.

Les micro-parois 2 délimitent une pluralité d'évidements concentriques 5.

Les micro-parois 2 peuvent, comme illustré, avoir une disposition sensiblement symétrique par rapport à un plan contenant l'axe X. Les micro-parois 2 peuvent notamment être symétriques de révolution par rapport à cet axe X.

Une micro-paroi 2 peut, comme représenté à la figure 1, être adjacente au bord périphérique 4 du substrat 1.

La hauteur *h* des micro-parois 2 peut, comme représenté à la figure 1, évoluer de manière monotone sur l'intégralité du rayon *R*₁ du substrat lorsque l'on s'éloigne du centre 7 du substrat. Cette hauteur *h* peut, par exemple comme illustré, être croissante sur l'intégralité du rayon *R*₁ lorsque l'on s'éloigne du centre 7 du substrat.

Dans des variantes non illustrées, la hauteur des micro-parois peut ne pas évoluer de manière monotone sur l'intégralité du rayon du substrat lorsque l'on s'éloigne du centre du substrat. Il est, par exemple, possible que la hauteur soit, lorsque l'on s'éloigne du centre du substrat, croissante sur un premier tronçon du substrat puis décroissante sur un second tronçon du substrat. En variante, la hauteur peut, lorsque l'on s'éloigne du centre du substrat, être décroissante sur un premier tronçon du substrat puis croissante sur un second tronçon du substrat.

Les micro-parois 2 peuvent, comme représenté à la figure 1, présenter une largeur *l* sensiblement constante.

L'espacement entre deux micro-parois 2 consécutives *e* peut, comme représenté à la figure 1, être sensiblement constant pour au moins trois micro-parois 2 consécutives.

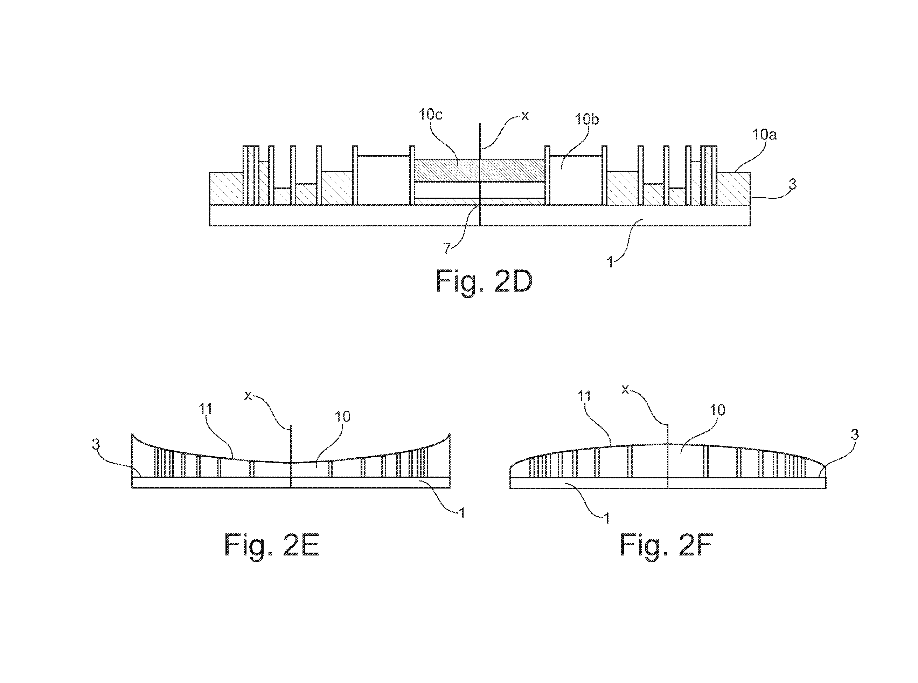

On a représenté à la figure 2 le dépôt réalisé lors de l'étape b), un matériau 10 ayant été déposé dans l'intégralité des évidements 5. Le dépôt de matériau 10 est délimité en hauteur par une surface supérieure 11 de dépôt. La surface supérieure 11 de dépôt peut, comme illustré à la figure 2, être de forme plane.

Dans des variantes non illustrées, le dépôt du matériau n'est réalisé que dans une partie seulement des évidements.

La hauteur *h₁* du dépôt réalisé lors de l'étape b) peut, comme représenté à la figure 2, être sensiblement constante.

On a représenté, à la figure 3, une schématisation des étapes c) et d).

Un système de dispense 20 permet de mettre en contact le milieu liquide 30 avec la surface supérieure 11 du dépôt. Le système de dispense 20 du milieu liquide 30 peut notamment être une buse d'injection.

Le système de dispense 20 du milieu liquide 30 peut, comme illustré à la figure 3, être mobile durant l'étape c).

Le système de dispense 20 peut être déplacé, lors de l'étape c), de manière continue ou discontinue le long du rayon *R*₁ du substrat. Autrement dit, le système de dispense 20 peut, lors de l'étape c), respectivement se déplacer sans s'arrêter le long de la surface supérieure 11 du dépôt ou alterner entre des étapes d'arrêt et de déplacement.

Indépendamment du caractère continu ou non du déplacement du système de dispense 20, le milieu liquide 30 peut, lors de l'étape c), être dispensé de manière continue ou discontinue. Autrement dit, l'écoulement du milieu liquide 30 peut, lors de l'étape c), respectivement ne pas être interrompu ou être interrompu puis repris au moins une fois.

Indépendamment du caractère continu ou non du déplacement du système de dispense 20 et de la dispense du milieu liquide 30, le système de dispense 20 peut, lors de l'étape c), se déplacer le long de la surface supérieure 11 du dépôt en s'éloignant du centre 7 du substrat. En variante, le système de dispense 20 se déplace, lors de l'étape c), le long de la surface supérieure 11 du dépôt en se rapprochant du centre 7 du substrat.

Le système de dispense 20 peut, en particulier, parcourir, lors de l'étape c), une distance inférieure ou égale, notamment sensiblement égale, au rayon *R*₁ du substrat. Le milieu liquide 30 peut, dans un exemple de réalisation, n'être dispensé, lors de l'étape c), que sur une partie de la surface supérieure 11 du dépôt.

On ne sort, bien entendu, pas du cadre de la présente invention lorsque plusieurs milieux liquides 30 différents sont dispensés lors de l'étape c).

Dans une variante non illustrée, le système de dispense 20 du milieu liquide 30 peut être immobile durant l'intégralité de l'étape c), en étant, par exemple, situé au dessus du centre 7 du substrat.

Comme représenté à la figure 3, l'ensemble constitué par le substrat 1, les micro-parois 2 et le matériau 10 est porté en rotation R afin d'imposer au milieu liquide 30, une fois mis en contact avec la surface supérieure 11 du dépôt, une force centrifuge.

La rotation R peut être imposée avant le début de l'étape c), pendant l'étape c) ou consécutivement à l'étape c).

On a illustré à la figure 4 une structure optique segmentée 100 obtenue à l'issue du procédé selon l'invention.

Cette structure optique 100 peut, de manière particulièrement préférée, constituer une lentille de Fresnel et les zones 31 constituer les différentes zones de Fresnel de ladite lentille, les micro-parois 2 délimitant les différentes zones de Fresnel 31 de la lentille obtenue.

Indépendamment de l'exemple de réalisation considéré, les micro-parois 2 peuvent présenter une hauteur *h* sensiblement constante comme représenté à la figure 1A.

Indépendamment de l'exemple de réalisation considéré, l'espacement *e* entre deux micro-parois 2 consécutives peut être variable comme illustré à la figure 1A.

Cette irrégularité peut, comme illustré à la figure 1A, aboutir à l'obtention d'une densité de micro-parois 2 supérieure du côté du bord périphérique 4 du substrat par rapport à la densité de micro-parois 2 au niveau d'une zone plus proche du centre 7 du substrat.

On a représenté à la figure 5 une vue en perspective d'un substrat 1 où les micro-parois 2 ont une forme circulaire lorsqu'observées selon l'axe X.

Indépendamment de l'exemple de réalisation considéré, le dépôt réalisé lors de l'étape b) peut présenter une hauteur *h₁* constante recouvrant respectivement la totalité des micro-parois 2 ou seulement une partie des micro-parois 2 comme représenté aux figures 2A et 2B.

Indépendamment de l'exemple de réalisation considéré, le dépôt de matériau 10 peut présenter une hauteur variable comme représenté à la figure 2C.

Indépendamment de l'exemple de réalisation considéré et comme illustré à la figure 2C, il est possible que la hauteur du dépôt réalisé lors de l'étape b) n'évolue pas de manière monotone sur l'intégralité du rayon *R₁* lorsque l'on s'éloigne du centre 7 du substrat.

Indépendamment de l'exemple de réalisation considéré, le substrat 1 peut, comme illustré à la figure 2D, comporter, à l'issue de l'étape b), un dépôt de trois matériaux distincts 10a, 10b et 10c.

Dans ce cas, comme illustré en figure 2D, le centre 7 du substrat peut, par exemple, être recouvert par un dépôt multicouche d'une pluralité de matériaux 10a, 10b et 10c.

Dans une variante non illustrée, un premier évidement comporte un dépôt d'un seul premier matériau et un second évidement, différent du premier, comporte un dépôt d'un seul second matériau, différent du premier matériau.

Les figures 2E et 2F représentent, quant à elles, des substrats 1 obtenus à l'issue d'une étape b) laquelle comporte une étape de re-façonnage de la surface supérieure 11 du dépôt de matériau 10.

Ainsi, à l'issue de l'étape b), le substrat 1 peut comporter une surface supérieure de dépôt 11 de forme convexe vers l'extérieur ou concave vers l'extérieur comme respectivement illustré en figures 2E ou 2F.

Une telle étape de re-façonnage peut, par exemple, être réalisée par polissage mécano-chimique, la forme de l'outil déterminant la forme de la surface supérieure 11 du dépôt obtenu.

### Exemple

### Etape 1 : Formation des micro-parois sur une face d'un substrat

On dispose d'un substrat se présentant sous la forme d'une plaque de verre sodocalcique de dimensions 5x5 cm et d'épaisseur 1,1 mm.

Un matériau photosensible hybride solgel est déposé sur ce substrat par enduction centrifuge (« spin coating ») via le système Gyrset. Les paramètres appliqués durant l'étape d'enduction centrifuge sont les suivants :
- accélération : 2000 tours/minute/seconde,
- vitesse : 1450 tours/minute, et
- durée : 30 secondes.

Une fois l'étape d'enduction centrifuge achevée, on réalise un recuit sur plaque chauffante durant 3 minutes à 80 °C.

Une étape d'écriture laser est ensuite menée. Les caractéristiques sont les suivantes :
- longueur d'onde : 375 nm,
- résolution : 5 µm, et
- puissance incidente avant focalisation : 100 µW.

A l'issue de l'écriture laser, un recuit sur plaque chauffante à 80 °C est réalisé durant 9 minutes.

Le produit obtenu subit ensuite une étape de développement par immersion dans l'alcool isopropylique lequel est mis en mouvement durant 20 minutes.

Un recuit final est opéré dans une étuve à 120 °C pendant 15 minutes.

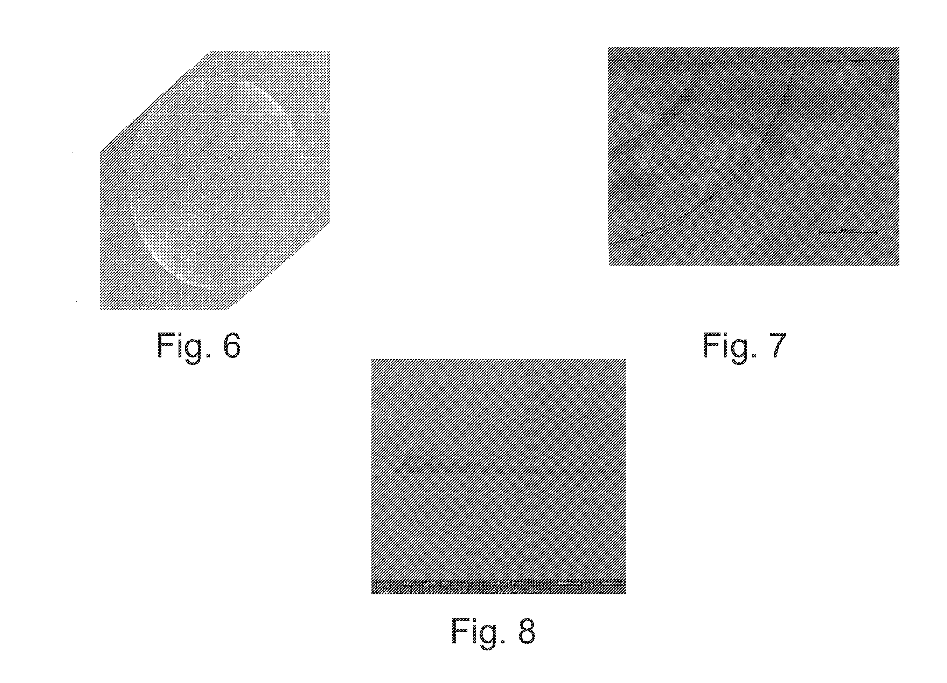

Une photographie d'un substrat obtenu par écriture laser directe et présentant sur une de ses faces des micro-parois est fournie en figure 6. La structure réalisée est de forme circulaire.

### Etape 2 : Dépose du matériau dans les évidements délimités par les microparois

Le substrat portant les micro-parois obtenu à l'issue de l'étape 1, décrite ci-dessus, est placé dans une machine d'enduction centrifuge (« spin coater ») équipée du système Gyrset. Le centre des micro-parois circulaires est superposé avec l'axe de rotation de la machine d'enduction centrifuge.

On dépose 2 mL de solution hybride solgel avec une micropipette en effectuant un mouvement en spirale, du centre vers l'extérieur du substrat, afin de couvrir au maximum l'échantillon.

Le « chuck » est mis en rotation avec Gyrset et les paramètres suivants :
- accélération: 1000 tours/minute/seconde,
- vitesse : 400 tours/minute,
- durée : 30 secondes.

Un recuit thermique post-dépôt sur plaque chauffante à 80 °C est réalisé pendant 3 minutes.

### Etape 3 : Solubilisation partielle du matériau déposé dans les évidements

Le produit obtenu à l'issue de l'étape 2, décrite ci-dessus, est posé sur le porte-échantillon de la machine d'enduction centrifuge. Le centre des micro-parois circulaires est superposé au centre de rotation.

Le produit est alors mis en rotation sans Gyrset avec les paramètres suivants :
- accélération : 1000 tours/minute/seconde,
- vitesse : 400 tours/minute,
- durée : 3 minutes

Les trois minutes programmées sont utilisées pour la dispense et le séchage de la plaque.

On dispense, pendant une minute, de manière discontinue de l'alcool isopropylique lequel est apte à solubiliser le matériau déposé dans les évidements. La dispense s'effectue au centre de l'échantillon avec une micropipette, le volume déposé est d'environ 30 mL.

L'échantillon est séché pendant les deux dernières minutes de rotation.

Deux photographies de la lentille de Fresnel obtenue à l'issue de l'étape 3 sont fournies en figures 7 et 8.

Sauf mention contraire, l'expression « comportant/comprenant un(e) » doit être comprise comme « comportant/comprenant au moins un(e) ».

Sauf mention contraire, l'expression « compris(e) entre ... et ...» doit s'entendre comme bornes inclues.

## Revendications

1. Procédé de fabrication d'une structure optique segmentée (100) comportant au moins les étapes consistant à :
a) disposer d'un substrat (1) muni sur une de ses faces (3) de micro-parois (2) formant, lorsque le substrat (1) est observé selon un axe (X) perpendiculaire à ladite face, une pluralité d'évidements concentriques (5),
b) déposer au moins un matériau (10 ; 10a ; 10b ; 10c) dans au moins un évidement (5),
c) mettre en contact au moins une partie de la surface supérieure (11) du dépôt de matériau (10 ; 10a ; 10b ; 10c) réalisé lors de l'étape b) avec au moins un milieu liquide (30) apte à solubiliser ledit matériau (10 ; 10a ; 10b ; 10c) et sensiblement inerte vis-à-vis des micro-parois (2) et du substrat (1),
d) imposer une force centrifuge au milieu liquide (30) déposé en c) de manière à modifier sa répartition sur la surface supérieure (11) du dépôt de matériau (10 ; 10a ; 10b ; 10c) réalisé lors de l'étape b),
et récupérer la structure optique segmentée à l'issue de l'évaporation totale du milieu liquide,
la quantité de milieu liquide (30) utilisée lors de l'étape c) permettant une solubilisation partielle du dépôt réalisé lors de l'étape b).

2. Procédé selon la revendication 1, l'étape d) étant initiée pendant ou consécutivement à l'étape c).

3. Procédé selon l'une quelconque des revendications 1 et 2, le milieu liquide (30) étant dispensé de manière discontinue et contrôlée sur au moins une partie de la surface supérieure (11) du dépôt réalisé lors de l'étape b).

4. Procédé selon l'une quelconque des revendications précédentes, le milieu liquide (30) étant appliqué sur au moins 25 %, de préférence au moins 50 %, de préférence au moins 75 %, de préférence sensiblement la totalité de la surface supérieure (11) du dépôt réalisé lors de l'étape b).

5. Procédé selon l'une quelconque des revendications précédentes, les étapes c) et/ou d) ayant lieu dans une enceinte dans laquelle règne une température comprise entre 3 °C et 50 °C.

6. Procédé selon l'une quelconque des revendications précédentes, les étapes c) et/ou d) ayant lieu dans une enceinte dans laquelle règne une hygrométrie relative comprise entre 10 % et 70 %, de préférence entre 20 et 55 %.

7. Procédé selon l'une quelconque des revendications précédentes, le matériau (10 ; 10a ; 10b ; 10c) étant, lors de l'étape b), déposé dans sensiblement la totalité des évidements (5).

8. Procédé selon l'une quelconque des revendications précédentes, la hauteur du dépôt réalisé lors de l'étape b) étant sensiblement constante.

9. Procédé selon l'une quelconque des revendications 1 à 7, la hauteur du dépôt réalisé lors de l'étape b) étant variable.

10. Procédé selon l'une quelconque des revendications précédentes, plusieurs matériaux différents (10a ; 10b ; 10c) étant déposés lors de l'étape b).

11. Procédé selon l'une quelconque des revendications précédentes, plusieurs milieux liquides différents étant dispensés lors de l'étape c).

12. Procédé selon l'une quelconque des revendications précédentes, les micro-parois (2) comportant, notamment consistant en, un ;
- matériau polymère organique, de préférence choisi parmi les résines photosensibles se présentant sous forme liquide ou sous forme de film sec,
- matériau hybride sol/gel, et
- leurs mélanges.

13. Procédé selon la revendication précédente, le milieu liquide (30) comprenant, notamment consistant en un :
- acide, de préférence choisi parmi l'acide fluorhydrique,
- alcool, de préférence choisi parmi l'alcool isopropylique, l'éthanol ou leurs mélanges,
- développeur de résine photosensible.

14. Procédé selon l'une quelconque des revendications précédentes, la quantité de milieu liquide (30) introduite dans au moins un évidement (5) étant ajustable et telle que le milieu liquide (30) recouvre la totalité de la surface supérieure du dépôt réalisé dans ledit évidement (5).

15. Procédé selon l'une quelconque des revendications précédentes, le matériau (10) déposé lors de l'étape b) étant un matériau hybride sol/gel.

16. Procédé selon l'une quelconque des revendications précédentes, la structure optique segmentée (100) obtenue étant une structure lenticulaire.

17. Procédé selon la revendication précédente, la structure lenticulaire étant une lentille de Fresnel.

18. Procédé selon la revendication précédente, les micro-parois (2) délimitant les différentes zones de Fresnel (31) de la lentille de Fresnel obtenue.

## Patentansprüche

1. Verfahren zur Herstellung einer segmentierten optischen Struktur (100), mit wenigstens den Schritten, die bestehen in:
a) Bereitstellen eines Substrats (1), das auf einer seiner Oberflächen (3) mit Mikrowänden (2) versehen ist, die, wenn das Substrat (1) in Richtung einer Achse (X) rechtwinklig zu dieser Oberfläche betrachtet wird, eine Vielzahl von konzentrischen Höhlungen (5) bilden,
b) Einbringen wenigstens eines Materials (10; 10a; 10b; 10c) in wenigstens eine Höhlung (5),
c) in Kontakt bringen wenigstens eines Teils der oberen Oberfläche (11) des in Schritt b) eingebrachten Materials (10; 10a; 10b; 10c) mit wenigstens einem flüssigen Milieu (30), das in der Lage ist, das genannte Material (10; 10a; 10b; 10c) löslich zu machen und das gegenüber den Mikrowänden (2) des Substrats (1) im wesentlichen inert ist,
d) Ausüben einer Zentrifugalkraft auf das in Schritt c) aufgebrachte flüssige Milieu (30) derart, dass seine Verteilung auf der oberen Oberfläche des in Schritt b) gebildeten Niederschlags des Materials (10; 10a; 10b; 10c) modifiziert wird,
und gewinnen der segmentierten optischen Struktur nach vollständiger Verdampfung des flüssigen Milieu,
wobei das in Schritt c) benutzte flüssige Milieu (30) eine teilweise Löslichmachung des in Schritt b) gebildeten Niederschlags erlaubt.

2. Verfahren nach Anspruch 1, bei dem der Schritt d) während des Schrittes c) oder im Anschluss an diesen initiiert wird.

3. Verfahren nach einem der Ansprüche 1 und 2, bei dem das flüssige Milieu (30) auf diskontinuierliche und kontrollierte Weise auf wenigstens einen Teil der oberen Oberfläche (11) des in Schritt b) gebildeten Niederschlags aufgebracht wird.

4. Verfahren nach einem der vorstehenden Ansprüche, bei dem das flüssige Milieu (30) auf wenigstens 25%, vorzugsweise wenigstens 50%, vorzugsweise wenigstens 75%, vorzugsweise im wesentlichen die Gesamtheit der oberen Oberfläche (11) des in Schritt b) gebildeten Niederschlags aufgebracht wird.

5. Verfahren nach einem der vorstehenden Ansprüche, bei dem die Schritte c) und/oder d) in einem Raum stattfinden, in dem eine Temperatur zwischen 3 °C und 50 °C herrscht.

6. Verfahren nach einem der vorstehenden Ansprüche, bei dem die Schritte c) und/oder d) in einem Raum stattfinden, in dem eine relative Feuchte zwischen 10% und 70%, vorzugsweise zwischen 20% und 55% herrscht.

7. Verfahren nach einem der vorstehenden Ansprüche, bei dem das Material (10; 10a; 10b; 10c) in Schritt b) im wesentlichen in die Gesamtheit der Höhlungen (5) eingebracht wird.

8. Verfahren nach einem der vorstehenden Ansprüche, bei dem die Höhe des in Schritt b) gebildeten Niederschlags im wesentlichen konstant ist.

9. Verfahren nach einem der Ansprüche 1 bis 7, bei dem die Höhe des in Schritt b) gebildeten Niederschlags variabel ist.

10. Verfahren nach einem der vorstehenden Ansprüche, bei dem in Schritt b) mehrere verschiedene Materialien (10; 10a; 10b; 10c) eingebracht werden.

11. Verfahren nach einem der vorstehenden Ansprüche, bei dem in Schritt c) mehrere verschiedene flüssige Milieus aufgebracht werden.

12. Verfahren nach einem der vorstehenden Ansprüche, bei dem die Mikrowände (2) aufweisen oder insbesondere bestehen aus:
- einem organischen Polymermaterial, vorzugsweise ausgewählt unter fotoempfindlichen Harzen in flüssiger Form oder in der Form eines trockenen Films,
- einem hybriden Sol/Gel-Material, und
- Gemischen hieraus.

13. Verfahren nach dem vorstehenden Anspruch, bei dem das flüssige Milieu (30) aufweist oder insbesondere besteht aus:
- einer Säure, vorzugsweise ausgewählt unter Fluorwasserstoffsäuren,
- einem Alkohol, vorzugsweise ausgewählt unter Isopropylalkohol, Ethanol oder Gemischen hieraus,
- einem fotoempfindlichen Entwicklerharz.

14. Verfahren nach einem der vorstehenden Ansprüche, bei dem die Menge des in wenigstens eine Höhlung (5) eingebrachten flüssigen Milieus (30) so einstellbar ist, dass das flüssige Milieu (30) die gesamte obere Oberfläche des in dieser Höhlung (5) gebildeten Niederschlags bedeckt.

15. Verfahren nach einem der vorstehenden Ansprüche, bei dem das in Schritt b) eingebrachte Material (10) ein hybrides Sol/Gel-Material ist.

16. Verfahren nach einem der vorstehenden Ansprüche, bei dem die erhaltene segmentierte optische Struktur (100) eine Linsenstruktur ist.

17. Verfahren nach dem vorstehenden Anspruch, bei dem die Linsenstruktur eine Fresnel-Linse ist.

18. Verfahren nach dem vorstehenden Anspruch, bei dem die Mikrowände (2) die verschiedenen Fresnel-Zonen (31) der erhaltenen Fresnel-Linse begrenzen.

## Claims

1. A process for manufacturing a segmented optical structure (100) comprising at least steps consisting in:
a) providing a substrate (1) equipped, on one of its faces (3), with microwalls (2) forming, when the substrate (1) is observed along an axis (X) perpendicular to said face, a plurality of concentric voids (5);
b) depositing at least one material (10; 10a; 10b; 10c) in at least one void (5);
c) bringing at least one part of the top surface (11) of the material (10; 10a; 10b; 10c) deposited in step b) into contact with at least one liquid medium (30) that is able to dissolve said material (10; 10a; 10b; 10c) and that is substantially inert with respect to the microwalls (2) and substrate (1);
d) applying a centrifugal force to the liquid medium (30) deposited in step c) so as to modify its distribution over the top surface (11) of the material (10; 10a; 10b; 10c) deposited in step b),
and recovering the segmented optical structure after complete evaporation of the liquid medium,
the amount of liquid medium (30) used in step c) enabling partial dissolution of the deposit produced in step b).

2. The process as claimed in claim 1, step d) being initiated during or consecutively to step c).

3. The process as claimed in either one of claims 1 and 2, the liquid medium (30) being discontinuously and controllably dispensed on at least one part of the top surface (11) of the deposit produced in step b).

4. The process as claimed in any one of the preceding claims, the liquid medium (30) being applied to at least 25%, preferably at least 50%, preferably at least 75%, preferably substantially all of the top surface (11) of the deposit produced in step b).

5. The process as claimed in any one of the preceding claims, steps c) and/or d) taking place in a chamber in which the temperature is between 3°C and 50°C.

6. The process as claimed in any one of the preceding claims, steps c) and/or d) taking placing in a chamber in which the relative humidity is between 10% and 70%, and preferably between 20 and 55%.

7. The process as claimed in any one of the preceding claims, the material (10; 10a; 10b; 10c) being, in step b), deposited in substantially all the voids (5).

8. The process as claimed in any one of the preceding claims, the height of the deposit produced in step b) being substantially constant.

9. The process as claimed in any one of claims 1 to 7, the height of the deposit produced in step b) varying.

10. The process as claimed in any one of the preceding claims, a plurality of different materials (10a; 10b; 10c) being deposited in step b).

11. The process as claimed in any one of the preceding claims, a plurality of different liquid mediums being dispensed in step c).

12. The process as claimed in any one of the preceding claims, the microwalls (2) comprising, especially consisting, of:
- an organic polymer material, preferably chosen from photoresists taking the form of a liquid or the form of a dry film;
- a hybrid sol-gel material; and
- mixtures thereof.

13. The process as claimed in the preceding claim, the liquid medium (30) comprising, especially consisting, of:
- an acid, preferably hydrofluoric acid;
- an alcohol, preferably chosen from isopropyl alcohol, ethanol or mixtures thereof;
- a photoresist developer.

14. The process as claimed in any one of the preceding claims, the amount of liquid medium (30) introduced into at least one void (5) being adjustable and such that the liquid medium (30) covers all of the top surface of the deposit produced in said void (5).

15. The process as claimed in any one of the preceding claims, the material (10) deposited in step b) being a hybrid sol-gel material.

16. The process as claimed in any one of the preceding claims, the segmented optical structure (100) obtained being a lenticular structure.

17. The process as claimed in the preceding claim, the lenticular structure being a Fresnel lens.

18. The process as claimed in the preceding claim, the microwalls (2) bounding the various Fresnel zones (31) of the Fresnel lens obtained.
